# EUROPÄISCHE PATENTSCHRIFT

(11) **EP 1 431 331 B1**
(45) Veröffentlichungstag und Bekanntmachung des Hinweises auf die Patenterteilung: **22.03.2006**
(21) Anmeldenummer: 02028830.4
(22) Anmeldetag: 21.12.2002
(51) Int. Cl.: C08G 77/34, C08G 77/46

(54) **Verfahren zur Aufbereitung von Polyethersiloxanen**
Process for treating polyether siloxanes
Procédé pour le traitement de polyéthersiloxanes

(43) Veröffentlichungstag der Anmeldung: 23.06.2004
(73) Patentinhaber: Goldschmidt GmbH, 45127 Essen (DE)
(72) Erfinder: Burkhart, Georg, Dr., 45239 Essen (DE); Dudzik, Horst, 45326 Essen (DE); Hiersche, Wolfgang, 45147 Essen (DE); Knott, Wilfried, Dr., 45141 Essen (DE); Möhring, Volker, Dr., 45470 Mülheim (DE)

(56) Entgegenhaltungen:
- EP-B- 0 398 684
- EP-B- 0 506 314
- WO-A-99/00445
- WO-A-02/068506

## Beschreibung

Organomodifizierte Siloxane, insbesondere Polyethersiloxane, sind vielfach eingesetzte Verbindungen in nahezu allen Bereichen, in denen es um die Steuerung grenzflächenaktiven Verhaltens geht. Die Anwendungsbreite dieser Stoffklasse beruht nicht zuletzt auf der Möglichkeit, durch geeignete Kombination von Siloxangerüst und Polyethern als Substituenten vielfältige Wirkprinzipien gezielt einzustellen.

Die Standardreaktion zur Organomodifizierung von Wasserstoffsiloxanen ist die Platinmetall-katalysierte Hydrosilylierung. Die technische Synthese Si-C-verknüpfter Polyethersiloxane stützt sich in beträchtlichem Umfang auf die Verwendung der leicht zugänglichen Allylpolyether.

Im Falle der Polyether-modifizierten Siloxane, hergestellt nach dem oben beschriebenen Verfahren aus Allylpolyethern und Wasserstoffsiloxanen, setzt man zur Sicherung eines quantitativen SiH-Umsatzes und damit zur Vermeidung einer H₂-Entwicklung aus dem Endprodukt teilweise beachtliche Überschüsse der Polyetherkomponente ein. Dieses Vorgehen erklärt sich daraus, dass neben der gewünschten Si-C-Verknüpfung in wechselndem Ausmaß die Isomerisierung des eingesetzten Allylpolyethers zum entsprechenden, thermodynamisch stabileren Propenylpolyether beobachtet wird. Der Propenylpolyether ist keiner Si-C-Verknüpfung unter den üblichen Bedingungen einer Hydrosilylierung zugänglich.

Aus der Präsenz des Propenylpolyethers leiten sich jedoch unerwünschte Eigenschaften des Polyethersiloxans ab. Unter dem Einfluss von Säurespuren und Feuchtigkeit unterliegt der Propenylpolyether der Hydrolyse; das heißt Propionaldehyd wird über einen gewissen Zeitraum freigesetzt. Als Folge von Sekundärreaktionen entstehen aus dem Propionaldehyd auch leicht lineare und/oder cyclische Oligomere (Aldoxane, Trioxane), die die Tendenz zur Rückspaltung und damit erneuten Aldehydfreisetzung aufweisen. Produkte, bei denen geruchliche Neutralität gefordert ist (beispielsweise für Anwendungen im Kosmetikbereich), bedürfen daher einer Nachbehandlung.

Sind in dem Aldehyd-belasteten System darüber hinaus Hydroxylgruppen tragende Verbindungen enthalten (beispielsweise Siloxan-gebundene Polyetherole), so kann es leicht zur Bildung von Acetalen kommen, die das physikochemische Eigenschaftsprofil des angestrebten Produktes verzerren können wie beispielsweise durch Erhöhung der Viskosität, durch Molmassenaufbau, etc.

Der Stand der Technik offenbart recht unterschiedliche Methoden zur Vermeidung oder Behebung der dargestellten Problematik bei Allylpolyether basierenden Systemen:

Die EP-A-0 118 824 beschreibt Organopolysiloxan-Polyoxyalkylen-Copolymere als Öle für kosmetische Zwecke mit einem Gesamtgehalt an Carbonylgruppen tragenden Verbindungen (Aldehyde + Ketone) ≤ 100 ppm und einem Peroxidgehalt ≤ 5 Milliäquivalenten/kg Substanz, die dadurch erhalten werden, dass man Antioxidantien in Mengen von 5 bis 1.000 ppm, gegebenenfalls in Gegenwart eines Puffers, bei der hydrosilylierenden Verknüpfung von bereits sehr reinen Allylpolyethern einsetzt.

Die JP-A-07304627 lehrt ein Verfahren zur Behandlung von Allylpolyether tragenden Organosiloxanen durch Vermischen derselben mit wässriger Salzsäure bei 60 °C im Verlauf von 24 Stunden. Der erzielte Aldehydgehalt beträgt ≤ 100 ppm und die Geruchsprüfung verläuft negativ.

Ein vergleichbares Vorgehen zur Säure-induzierten Hydrolyse von Propenylpolyetheranteilen unter Freisetzung und der damit ermöglichten Abtrennung von Propionaldehyd ist in J. Soc. Cosmet. Chem. Japan (1993), 27(3), 297-303 beschrieben.

Die DE-A-41 16 419 stellt auf die Beseitigung unerwünschter Geruchsquellen im Allylpolyethersiloxan durch heterogen-katalytische Druckhydrierung an Nickel/Kieselgur-Kontakten ab, wobei farblos klare Produkte ohne penetranten Geruch erhalten werden, die im wässrig-sauren System und in einem pH-Bereich von 3 bis 4 über einen Zeitraum von 6 Wochen stabil sind.

Die EP-A-0 398 684 beschreibt die Herstellung geruchsarmer Polyoxyalkylen-Silicon-Blockcopolymere in der Weise, dass man ein Wasserstoffsiloxan mit Allylpolyethern in Ethanol Pt-katalysiert zur Umsetzung bringt, das Reaktionsgemisch mit einer verdünnten Salzsäurelösung in der Hitze für einige Stunden behandelt und dann einer Vakuumdestillation unterzieht, wobei ein nahezu geruchloses Copolymer gewonnen wird.

Weiter ist im Stand der Technik die Möglichkeit beschrieben, unerwünschten Geruch in Allylpolyethersiloxanen durch den Zusatz geringer Mengen an Phytinsäure zu unterdrücken, die jedoch im System verbleibt (JP-A-60018525).

Welche Nebenwege zur Vermeidung der aus der Allylpolyether-Isomerisierung resultierenden Probleme beschritten werden, wird beispielsweise in der EP-A-0 308 260 offenbart, die ein Verfahren zur Herstellung hochreiner Oxyalkylen-modifizierter Organopolysiloxane unter Nutzung von Vinyloxy-terminierten Polyethern beansprucht. Dieser Herstellungsweg ist aus Gründen begrenzter Verfügbarkeit und erhöhter Rohstoffkosten nicht beliebig erweiterbar.

Auch die JP-A-09012723 bedient sich einer Vermeidungsstrategie, die Wasserstoffatome in Position 3 der Polyether-gebundenen Allylgruppe durch Kohlenwasserstoffsubstituenten ersetzt. Naturgemäß erleidet ein derartig abgewandeltes System keine Allyl-Propenyl-Umlagerung während der Hydrosilylierung.

Bei Würdigung aller dieser Verfahren ist festzustellen, dass kein Verfahren geeignet ist, für alle Allylpolyethersiloxane in verschiedenartigsten Anwendungen nutzbar zu sein. Systemimmanente Zusätze wie Antioxidantien und komplexierende Säuren (Phytinsäure) verhindern den Einsatz der so behandelten Copolymere in verschiedenen Anwendungen beispielsweise im Kosmetik- oder Lackbereich.

Verfahren wie die heterogen-katalytische Druckhydrierung sind aufwendig und teuer und damit nur für kleine, hochpreisige Anwendungsfelder der Siliconpolyether vertretbar. Bezieht man in diese Betrachtung insbesondere diejenigen Siliconpolyether, die Eingang in die Herstellung von Polyurethanschäumen in Form von Schaumstabilisatoren nehmen und einen komplexen Aufbau besitzen, mit ein, so zeigen sich auch die Unzulänglichkeiten einer Säurebehandlung bzw. einer kombinierten Säure/Alkoholbehandlung der entsprechenden Blockcopolymeren.

Versuche zur Säurebehandlung dieser Funktionstenside unter moderaten Bedingungen verdeutlichen die desaströse Wirkung dieses Verfahrens auf die anwendungstechnische Eignung als Schaumstabilisatoren, insbesondere bei Heißweichschaumsystemen. Anstelle der gewünschten Schaumstabilisierung wird ein Kollaps der labilen Schaumstruktur beobachtet.

Die JP-A-09095536 beschäftigt sich mit der Herstellung hochreiner, Oxyalkylengruppen enthaltender Siloxane als Modifizierungsagentien für Polyurethane. Betrachtet werden hier die Anlagerungsprodukte sehr kurzkettiger Allylethylenoxy-propylenoxy-ether mit (M ≤ 250 g/Mol) an Wasserstoffsiloxane. Nach beendeter Anlagerung unterwirft man das Rohprodukt einer Behandlung mit Strippgas bei 150 °C und vermindertem Druck (5 Torr). Diese Bedingungen sind ausreichend, nichtumgesetzte niedermolekulare Ether, wie z.B. Propylenglykolmonoallylether, aus dem Endprodukt nahezu vollständig zu entfernen. Im Falle der Allylpolyethersiloxane, deren Polyetherbasis Molmassen von ca. 400 - 10.000 g/Mol umfasst, sind jedoch Propenylhaltige Anteile nicht dauerhaft und vollständig auf diesem Wege zu beseitigen.

Somit besteht die Aufgabe der vorliegenden Erfindung darin, ein kostengünstiges und schonendes Verfahren zur Aufbereitung, insbesondere zur Aufreinigung von Allylpolyethersiloxanen bereitzustellen, das zu praktisch dauerhaft geruchlosen sowie emissionsarmen und darüber hinaus in ihrer anwendungstechnischen Performance verbesserten Produkten führt. Insbesondere besteht die Aufgabe der Erfindung in der Bereitstellung eines Reinigungsverfahrens für Allylpolyethersiloxane, die den strengen Kriterien von Heißweichschaumstabilisatoren entsprechen.

Überraschenderweise wurde nun gefunden, dass sich Allylpolyethersiloxane durch eine Behandlung mit wässriger H₂O₂ mit anschließender thermischer Trennung schonend und permanent von geruchsbildenden Beimengungen und cyclischen Siloxanen (D₄, D₅, D₆) befreien lassen. Darüber hinaus war nicht vorhersehbar, dass mit dieser Art von Desodorierung auch ein Performancegewinn speziell bei den Stabilisatorsystemen, die Eingang in den Heißweichschaum nehmen, einhergeht.

Für den Fachmann ist dies um so überraschender, da wässrige Lösungen von Wasserstoffperoxid bekannterweise sonst dazu benutzt werden, die organische Fracht biologisch schwer abbaubarer Abwässer so zu fragmentieren, dass die sich ergebenden Bruchstücke von Mikroorganismen leicht metabolisiert werden.

Folgt man dem hier erfindungsgemäß beanspruchten Prozess einer Behandlung mit wässriger H₂O₂, so wird diese Art einer produktschädigenden oxidativen Degradation erstaunlicherweise nicht beobachtet.

Verfahren zur schonenden und permanenten Entfernung von geruchsbildenden Beimengungen und cyclischen Siloxanen aus Polyethersiloxanen, dadurch gekennzeichnet, dass man diese mit einer 0,1 bis 10 Gew.-%igen wässrigen H₂O₂₋Lösungen behandelt und nach den an sich bekannten Trennmethoden von flüchtigen Bestandteilen befreit.

Die Konzentration der nach dem erfindungsgemäßen Verfahren verwendeten Wasserstoffperoxidlösung orientiert sich einerseits an der Notwendigkeit in relativ kurzer Zeit den gewünschten Aufreinigungseffekt zu erzielen, andererseits aber auch an der Vermeidung eines produktschädigenden, oxidativen Abbaues. Somit wird vorzugsweise eine wässrige Lösung mit Gehalten zwischen 0,1 bis 10 Gew.-% H₂O₂, insbesonders zwischen 2 und 8 Gew.-% H₂O₂, bevorzugt zwischen 3 und 5 Gew.-% H₂O₂ eingesetzt.

Eine ähnliche Betrachtung wie bei der dargelegten Einsatzkonzentration der wässrigen Wasserstoffperoxidlösung gilt auch bei der bezogen auf die zu behandelnde Siliconpolyethermenge einzusetzende Menge an Reagenzlösung. Die Einsatzmenge an H₂O₂ sollte einerseits ausreichend sein für die dauerhafte Entfernung geruchsbildender Komponenten aus der Reaktionsmischung, andererseits sind unnötige Überschüsse aus Gründen der Verfahrensökonomie als auch durch das Ziel, Abwasserströme zu reduzieren, zu vermeiden.

Sinnvollerweise wird die Wasserstoffperoxidlösung in Mengen eingesetzt, die einem Gehalt von 0,05 bis 5 Gew.-%, vorzugsweise 0,1 bis 1 Gew.-%, reinem H₂O₂, bezogen auf das zu behandelnde Polyethersiloxan, entsprechen.

Diese Mengen sind ausreichend für die nach der Standardreaktion mittels Platinmetall-katalysierten Hydrosilylierung hergestellten Polyethersiloxane. Ergeben sich aufgrund besonderer Umstände andere Zusammensetzungen der Reaktionsmischungen, kann die dann erforderliche wirksame Menge an H₂O₂ durch einfache Orientierungsversuche ermittelt werden.

Die Kontaktierung des Siliconpolyethers mit der wässrigen H₂O₂-Lösung sollte in einem Temperaturbereich zwischen 50 °C und 140 °C, besonders bevorzugt zwischen 90 °C und 120 °C vorgenommen werden.

Bei den erfindungsgemäß bevorzugten Temperaturen im oberen Bereich, d.h. um 90 °C oder höher reichen bereits wenige Minuten Behandlungszeit aus, um den angestrebten Erfolg zu erzielen. Im unteren Temperaturbereich verlängert sich die Behandlungszeit naturgemäß etwas. Sie ist aber immer noch deutlich geringer als bei den Verfahren gemäß bekanntem Stand der Technik wie beispielsweise Hydrierung oder Wasserdampfbehandlung.

Apparative Maßnahmen, die auf eine Vergrößerung der Phasengrenzfläche zwischen organischer und wässriger Phase gerichtet sind, wie z.B. schnelllaufende Rührorgane, der Einbau statischer Mischer o.ä. wirken vorteilhaft auf den Prozess.

Nach der erfindungsgemäßen Behandlung mit H₂O₂ wird das Reaktionsgemisch nach den an sich bekannten Trennmethoden, vorzugsweise destillativ bei erhöhten Temperaturen und gegebenenfalls verringertem Druck, von flüchtigen Bestandteilen befreit.

Besonders bevorzugt im Sinne der vorliegenden Erfindung werden Si-C-verknüpfte Siloxane der erfindungsgemäßen Behandlung mit H₂O₂ unterworfen, da diese eine geringere Hydrolyseneigung als Si-O-C-verknüpfte Siloxane aufweisen und darüber hinaus auf anderem Wege hergestellt werden. Durch kinetische Kontrolle lassen sich jedoch auch diese Siloxane erfindungsgemäß aufbereiten.

Unterzieht man beispielsweise Polysiloxan-Polyoxyalkylen-Blockmischpolymerisate, die unterschiedliche Polyoxyalkylenblöcke im durchschnittlichen Molekül aufweisen (EP-B-0 585 771), einer Behandlung mit einer Lösung von H₂O₂ in Wasser und unterwirft das sich ergebende stoffliche Mehrphasensystem einer thermischen Trennung, so wird in erheblichem Maße Propionaldehyd gemeinsam mit Wasser aus dem Copolymerisat herausgetrieben. Zugleich sinkt auch der Gehalt an Siloxancyclen (D₄, D₅, D₆). Einhergehend mit der Abreicherung flüchtiger Bestandteile wird nicht nur ein Aktivitätsgewinn des behandelten Schaumstabilisators beobachtet, sondern es wird auch dessen Tendenz zur Steuerung eines feinzelligen Polymerschaums erhöht.

Mittels des erfindungsgemäßen Verfahrens können die Polyethersiloxane vor der Entfernung der flüchtigen Bestandteile nach den an sich bekannten Verfahren allein durch kurzzeitiges intensives Vermischen mit einer wässrigen H₂O₂-Lösung, gegebenenfalls bei erhöhter Temperatur, dauerhaft von geruchsbildenden Bestandteilen befreit werden. Das (überschüssige) eingebrachte H₂O₂ zersetzt sich in H₂O und O₂ und hinterlässt somit keine durch gesonderte Reinigungsstufen wieder zu entfernenden Fremdbestandteile.

Da weiterhin prinzipiell keine speziellen zusätzlichen Reaktorausrüstungen erforderlich sind, übertrifft das erfindungsgemäße Verfahren die bekannten Verfahren sowohl verfahrenstechnisch, hinsichtlich Raum/Zeit-Ausbeute als auch der direkten Verwendbarkeit der so gereinigten Polyethersiloxane in den oben genannten sensiblen Anwendungsbereichen.

Ein weiterer Vorteil des erfindungsgemäßen Verfahrens liegt darin, dass es, falls gewünscht, problemlos mit den bekannten Verfahren kombiniert werden kann. So könnte beispielsweise das Wasserdampfverfahren zur Entfernung des Hauptanteils störender Bestandteile dem erfindungsgemäßen Verfahren, welches dauerhaft die letzten Spuren dieser Anteile beseitigt, vorgeschaltet werden. Eine Variante könnte auch darin bestehen, H₂O₂ gleichzeitig mit dem Wasserdampf der Reaktionsmischung zuzusetzen. Weitere Abwandlungen mit einem oder mehreren der bekannten Verfahren sind offensichtlich.

In den Ausführungsbeispielen werden die anwendungstechnischen Eigenschaften der nach dem erfindungsgemäßen Verfahren aufgereinigten Siloxan-Allylpolyether-Copolymere näher erläutert.

### Ausführungsbeispiele:

### Bezugsbeispiel

### Herstellung des aufzubereitenden Polyethersiloxans

In einem Kolben, der mit Tropftrichter, Rührer, Thermometer, Gaseinleitung und Rückflusskühler versehen war, wurden 7,5 g (= 0,0125 Mol) eines Polyethers mit der mittleren Formel

CH₂=CH-CH₂O- (C₂H₄O-)₁₂CH₃ (Typ A)

301,8 g (= 0,075 Mol) eines Polyethers mit der mittleren Formel

CH₂=CH-CH₂O- (C₂H₄O)₄₅(C₃H₆O-)₃₄CH₃ (Typ B)

56,6 g (= 0,0375 Mol) eines Polyethers mit der mittleren Formel

CH₂=CH-CH₂O- (C₂H₄O-)₅(C₃H₆O-)₂₁CH₃ (Typ C)

und 16 mg C₂H₄C₅H₅N.PtCl₂ vorgelegt. Durch die Apparatur wurde Stickstoff geleitet. Nach Aufheizen auf 120 °C wurden 65,5 g (= 0,1 Mol SiH) eines Siloxans mit der durchschnittlichen Formel

H (CH₃)₂SiO-[(CH₃)₂SiO-]₈₀[(CH₃)HSiO-]₈Si(CH₃)₂H

zugetropft. Man ließ 2,5 Stunden nachreagieren. Der SiH-Umsatz betrug 99,4 %.

Man erhielt nach Filtration über eine Seitz-K-300-Filterscheibe ein klares, leicht gelbliches und durch einen kräftigen Propionaldehyd-Geruch gekennzeichnetes Produkt.

### Ausführungs-Beispiele:

Aufreinigung des im Bezugsbeispiel gewonnenen Polysiloxan-Polyoxyalkylen Blockmischcopolymerisates

### Ausführungsbeispiel 1:

In einen auf 120 °C erwärmten 500-ml-Einhalsrundkolben (befestigt an einem Rotationsverdampfer) wird eine Mischung aus 200 g rohem Polyethersiloxan und 10 g einer 3 %igen wässrigen H₂O₂-Lösung sukzessive eingesaugt (20 mbar) und im Verlauf von 30 Minuten von Wasser und flüchtigen Bestandteilen befreit.
Die thermische Trennung wurde bereits 5 Minuten nach beendeter Dosage abgebrochen. Abgetrennt wurden 1,8 g flüchtige Bestandteile.
Erhalten wurde ein farbloses, geruchsneutrales Polyethersiloxan, das auch nach 6-monatiger Lagerung bei Raumtemperatur geruchsfrei blieb.

### Ausführungsbeispiel 2:

Eine Mischung bestehend aus 476,2 g rohen Polyethersiloxans und 23,8 g einer 3 %igen wässrigen H₂O₂-Lösung wurde aus einer auf 100 °C temperierten Vorlage im Verlauf von 17 Minuten einem mit einer Zerstäuberdüse ausgerüsteten gläsernen Sprühturm zugeführt. Der Sprühturm und die nachgeschaltete Produktvorlage waren auf 100 °C erwärmt und wiesen einen Druck von 50 mbar auf. Am Fuß des Sprühturms war eine Demisterschicht integriert, die dazu diente, den aus der Zersetzung des Wasserstoffperoxids resultierenden Schaum zu brechen.
In einer nachgeschalteten gekühlten Vorlage erfolgte die Kondensation der flüchtigen Bestandteile (Gesamtmasse: 25,6 g).
Das erfindungsgemäß behandelte Polyethersiloxan war eine farblose, geruchsfreie Flüssigkeit, die auch nach 6-monatiger Lagerung keinen Geruch aufwies. Die GC-Analytik belegte folgenden Aufreinigungseffekt:

| GC-Bestandteile | Rohes Polyethersiloxan (Bezugsbeispiel) | Erfindungsgemäß behandeltes Polyethersiloxan (Ausführungsbeispiele 1/2) |
|---|---|---|
| Freier Propionaldehyd* | 30 ppm | < 1/1 ppm |
| D₄ | 0,8 % | < 0,1/0,1 % |
| D₅ | 0,4 % | < 0,1/0,1 % |
| D₆ | 0,1 % | < 0,1/0,1 % |

| | | |
|---|---|---|
| *freier Propionaldehyd wurde mittels eines Headspace-Gaschromatographen über eine Aufstockmethode (Lösung in Benzylalkohol) bestimmt | | |

### Anwendungstechnische Prüfung:

Die anwendungstechnische Prüfung der hergestellten Schaumstabilisatoren erfolgte mit einer Schaumrezeptur auf folgende Weise:
Jeweils 300 Teile eines handelsüblichen Polyethers zur Herstellung von flexiblen Polyurethanschaumstoffen, welcher im mittleren Molekül drei Hydroxylgruppen aufwies und ein Molekulargewicht von 3.500 hatte, wurden mit 15 Teilen Wasser, 15 Teilen eines üblichen physikalischen Treibmittels, der entsprechenden Menge des zu untersuchenden Schaumstabilisators, 0,33 Teilen Diethylentriamin und 0,69 Teilen Zinnoctoat unter gutem Rühren vermischt. Nach Zugabe von 189 Teilen Toluoldiisocyanat (Isomerengemisch 2,4 und 2,6 im Verhältnis 4 : 1) wurde mit einem Glattrührer 7 Sekunden bei 2.500 U/Min. gerührt und das Gemisch in einen oben offenen Kasten gegossen. Es entstand ein feinporiger Schaumstoff, der durch folgende Parameter charakterisiert wird:
1. das Rücksacken des Schaumstoffes am Ende der Steigphase (in der folgenden Tabelle als "Rückfall" bezeichnet).
2. die Zahl der Zellen pro Zentimeter Schaum, die mikroskopisch ermittelt wurden.

Folgende Tabelle stellt die Messwerte für 2 verschiedene Konzentrationen (1,8 Teile/1,5 Teile) des nach dem Bezugsbeispiel sowie nach dem Ausführungsbeispiel 1 gewonnenen Stabilisators gegenüber:

| Beispiel | Rückfall | Zellen pro Zentimeter |
|---|---|---|
| Bezugsbeispiel | 0,9 / 2,0 | 13 / 12 |
| Ausführungsbeispiel 1 | 0,7 / 1,4 | 16 / 15 |

Diese Gegenüberstellung dokumentiert die anwendungstechnische Verbesserung, die das erfindungsgemäße Verfahren für Polyurethanweichschaumstabilisatoren erschließt.

Neben der Beseitigung unerwünschter Geruchsbehaftung und der Reduzierung freier Siloxancyclen gewann der Schaumstabilisator sowohl unter dem Aspekt der Aktivität als auch unter dem Gesichtspunkt einer erhöhten Feinzelligkeit.

Empirisch gesichert beobachtete man beim Übergang von der Creme- zur Steigphase im Falle der Schaumvergröberung ein deutlich erkennbares, anhaltendes Sprühen auf der Schaumoberfläche. Beim Einsatz der erfindungsgemäß behandelten Polyethersiloxane wurde dieses charakteristische Sprühen nicht beobachtet.

### Vergleichsbeispiel Trägergas:

In Analogie zu dem in der JP-A-09095536 offenbarten Verfahren wurde das gemäß Bezugsbeispiel erhaltene Polyethersiloxan einer zweistündigen Behandlung mit N₂ als Strippgas bei 150 °C und vermindertem Druck (5 Torr) unterworfen.

Der Anteil flüchtiger Bestandteile, die durch dieses Verfahren herausgeschleppt wurden, betrug 3,7 %. Das erhaltene Produkt war deutlich kräftiger gefärbt als das Ausgangsmaterial und immer noch mit penetrantem Aldehydgeruch behaftet. Die GC-Headspace-Analytik wies eine Konzentration freien Propionaldehyds von 5 ppm nach.

Die anwendungstechnische Bewertung als Schaumstabilisator zeichnet folgendes Bild:

| Beispiel | Rückfall | Zellen pro Zentimeter |
|---|---|---|
| Vergleichsbeispiel | 0,9 / 1,5 | 15 / 14 |
| Ausführungsbeispiel 1 | 0,7 / 1,4 | 16 / 15 |

### Vergleichsbeispiel Wasserdampf:

180,5 g eines aus analogen Rohstoffen gewonnenen Allylpolyethersiloxans vergleichbaren Strukturtyps wie im Bezugsbeispiel wurden in einem Mehrhalsrundkolben mit Rührer und aufgesetzter Destillationsbrücke bei 120 °C vorgelegt und über ein Einleitungsrohr für 30 Minuten mit Wasserdampf von 155 °C behandelt (360g). 2,8 g flüchtige Komponenten wurden ausgetrieben und in einer nachgeschalteten Vorlage kondensiert. Es war kein Aldehydgeruch bemerkbar.

Analog Ausführungsbeispiel 1 wurden das Wasserdampf behandelte Material als Schaumstabilisator bewertet: 14/15 Zellen/cm; Rückfall: 0,9/1,6.
Nach 6-monatiger Lagerung war wieder ein deutlicher Aldehydgeruch wahrnehmbar.

Die Beispiele belegen in eindeutiger Weise, dass das erfindungsgemäße Verfahren es ohne den Einsatz von großen Wassermengen oder verunreinigenden Zusätzen schafft, aus einem an sich wenig geeigneten Weichschaumstabilisator ein Produkt mit gutem bis sehr gutem technischem Eigenschaftsprofil herzustellen und darüber hinaus auf Dauer Geruchsfreiheit zu garantieren.

## Patentansprüche

1. Verfahren zur schonenden und permanenten Entfernung von geruchsbildenden Beimengungen und cyclischen Siloxanen aus Polyethersiloxanen, **dadurch gekennzeichnet, dass** man diese mit einer 0,1 bis 10 Gew.-%igen wässrigen H₂O₂-Lösungen behandelt und nach den an sich bekannten Trennmethoden von flüchtigen Bestandteilen befreit.

2. Verfahren nach Anspruch 1, **dadurch gekennzeichnet, dass** man die Behandlung mit H₂O₂ bei Temperaturen im Bereich von 50 bis 140 °C durchführt.

3. Verfahren nach den Ansprüchen 1 bis 2, **dadurch gekennzeichnet, dass** H₂O₂ in Mengen von ca. 0,5 bis 5 Gew.-%, bezogen auf das zu behandelnde Polyethersiloxan, eingesetzt wird.

4. Verfahren nach den Ansprüchen 1 bis 3, **dadurch gekennzeichnet, dass** man Si-C-verknüpfte Allylpolyethersiloxane aufbereitet.

5. Verfahren nach einem der Ansprüche 1 bis 4, **dadurch gekennzeichnet, dass** man Polysiloxan-Polyoxyalkylen-Blockmischpolymerisate aufbereitet.

6. Allylpolyethersiloxane, erhältlich nach einem der Ansprüche 1 bis 4.

7. Verwendung von Allylpolyethersiloxanen nach Anspruch 6 als Schaumstabilisator, insbesondere zur Herstellung von Weichschaum auf der Basis von Polyurethanen.

## Revendications

1. Procédé pour l'élimination douce et permanente de quantités secondaires responsables d'une odeur et de siloxanes cycliques de polyéthersiloxanes, **caractérisé en ce qu'**on les traite avec des solutions aqueuses de H₂O₂ à 0,1 jusqu'à 10% en poids et on les débarrasse des constituants volatils selon des procédés de séparation connus.

2. Procédé selon la revendication 1, **caractérisé en ce qu'**on réalise le traitement au H₂O₂ à des températures dans la plage de 50 à 140°C.

3. Procédé selon les revendications 1 à 2, **caractérisé en ce qu'**on utilise le H₂O₂ en des quantités d'environ 0,5 à 5% en poids par rapport au polyéthersiloxane à traiter.

4. Procédé selon les revendications 1 à 3, **caractérisé en ce qu'**on traite des allylpolyéthersiloxanes liés par SiC.

5. Procédé selon l'une quelconque des revendications 1 à 4, **caractérisé en ce qu'**on traite des copolymères à blocs de polysiloxane-polyoxyalkylène.

6. Allylpolyéthersiloxanes, pouvant être obtenus selon l'une quelconque des revendications 1 à 4.

7. Utilisation d'allylpolyéthersiloxanes selon la revendication 6 comme stabilisateurs de mousse, en particulier pour la préparation de mousse souple à base de polyuréthanes.

## Claims

1. Process for the gentle and permanent removal of odour-forming impurities and cyclic siloxanes from polyethersiloxanes, **characterized in that** said polyethersiloxanes are treated with from 0.1 to 10% strength by weight aqueous H₂O₂ solutions and are freed from volatile components by the separation methods known per se.

2. Process according to Claim 1, **characterized in that** the treatment with H₂O₂ is carried out at temperatures in the range from 50 to 140°C.

3. Process according to either of Claims 1 and 2, **characterized in that** H₂O₂ is used in amounts of from about 0.5 to 5% by weight, based on the polyethersiloxane to be treated.

4. Process according to any of Claims 1 to 3, **characterized in that** Si-C-linked allylpolyethersiloxanes are worked up.

5. Process according to any of Claims 1 to 4, **characterized in that** polysiloxane/polyoxyalkylene block copolymers are worked up.

6. Allylpolyethersiloxane obtainable according to any of Claims 1 to 4.

7. Use of allylpolyethersiloxanes according to Claim 6 as a foam stabilizer, in particular for the preparation of a flexible foam based on polyurethanes.
